(19)

Europäisches
Patentamt
European
Patent Office
Office européen
des brevets

(11) **EP 2 442 484 A1**

(12) **EUROPEAN PATENT APPLICATION**

(43) Date of publication:
**18.04.2012 Bulletin 2012/16**

(51) Int Cl.:
***H04L 9/32*** (2006.01)

(21) Application number: **11184740.6**

(22) Date of filing: **11.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.10.2010 US 393730 P**

(71) Applicants:
• **Certicom Corp.**
  **Mississauga, ON L4W 5L1 (CA)**
• **Certicom (U.S) Limited**
  **Wilmington DE 19801 (US)**

(72) Inventors:
• **Campagna, Matthew John**
  **Ridgefield, CT Connecticut 06877 (US)**
• **Brown, Daniel Richard L**
  **Mississauga, Ontario L4W 0B5 (CA)**
• **Zaverucha, Gregory Marc**
  **Mississauga, Ontario L4W 0B5 (CA)**

(74) Representative: **Moore, Barry et al**
  **Hanna Moore & Curley**
  **13 Lower Lad Lane**
  **Dublin 2 (IE)**

(54) **Authenticated encryption for digital signatures with message recovery**

(57) A framework is proposed for authenticated encryption for digital signatures with message recovery whereby authentication is achieved without a redundancy requirement. The Elliptic Curve Pintsov-Vanstone Signature scheme is modified through the use of authenticated encryption, thereby enabling authentication using a message authentication code (1028). The authenticated encryption may be performed within a single function or as two separate functions. The authenticated encryption may also be applied to associated data in the message (104) to be signed.

FIG. 4

EP 2 442 484 A1

**Description**

TECHNICAL FIELD

The technology described herein relates generally to cryptographic signatures, and particularly to the generation and use of cryptographic signatures with message recovery.

BACKGROUND

Traditional cryptographic signature schemes can be used to provide (1) assurance of the identity of the signer, and (2) assurance that a received message has not been altered during transmission. Typically, a signer generates an unforgeable signature on a message, such that a recipient may subsequently verify the signature for authentication of the signer's identity and the origin of the message.

In general, smaller-sized cryptographic values are desirable because they may reduce storage and transmission requirements. Signature schemes which are based on the intractability of the elliptic curve discrete logarithm problem, such as the Elliptic Curve Digital Signature Algorithm (ECDSA), for example as described in "American National Standard for Financial Services ANS X9.62-2005: Public Key Cryptography for the Financial Services Industry - The Elliptic Curve Digital Signature Algorithm (ECDSA)", Accredited Standards Committee X9, Inc., 2005, may enable the use of smaller signatures than those of other cryptography schemes, such as the Rivest Shamir Adleman (RSA) algorithm, for example as described in "PKCS #1 v2.1: RSA Cryptography Standards", RSA Laboratories, 2002, while still offering the same level of security. Digital signatures with partial message recovery, for example as described by Nyberg et al. in "Message Recovery for Signature Schemes Based on the Discrete Logarithm Problem", Advances in Cryptology - Eurocrypt '94, Springer Verlag, New York, 1994, may also reduce transmission requirements of the [message, signature] pair by embedding a portion of the message (the hidden portion) within the signature value, while not increasing the size of the signature. For example, the portion of the message that is embedded might include the address of the sender, or a confirmation of the recipient's address. The Elliptic Curve Pintsov-Vanstone Signature (ECPVS) scheme is an example of a digital signature scheme with partial message recovery. The ECPVS scheme is described in more detail, for example in "American National Standard for Financial Services Draft X9.92-2007-02-21: Public Key Cryptography for the Financial Services Industry, Digital Signature Algorithms Giving Partial Message Recovery Part 1: Elliptic Curve Pintsov-Vanstone Signatures (ECPVS)", Accredited Standards Committee X9, Inc., 2007, as well as by Vanstone et al. in U.S. Patent No. 7,249,259. In ECPVS, all or part of the message to be signed can be embedded or "hidden" in and recovered from the signature. This scheme can also be used to provide a level of confidentiality by adding the restriction that the public key of the signer be kept secret, such that only parties who possess the public key may verify the signature, and hence only they may compute the hidden portion of the message.

In order for an ECPVS signature to be verified, the hidden portion of the message to be signed has a predefined characteristic that is chosen by the signer and agreed on by the verifier. For example, the hidden portion may contain a certain level of redundancy, which is checked by the verifier in order to verify the signature. The redundancy allows the hidden portion of the message to be identified as belonging to a set of valid plaintexts. Given sufficient redundancy, it should be infeasible for a forger to produce a signature which satisfies all criteria. The more redundancy there is in the hidden portion of the message, the higher the level of security, and the longer the signed message to be transmitted.

SUMMARY

A framework for using authenticated encryption in digital signatures with message recovery is herein proposed whereby the ECPVS scheme is modified to remove the redundancy criteria on the hidden portion of a message to be signed. The framework proposed herein augments the security of regular symmetric key encryption with authenticity by replacing the encryption traditionally used in ECPVS with authenticated encryption. The proposed framework can be applied to signature generation and signature verification.

In one example, an Authenticated Encryption - Pintsov Vanstone (AE-PV) scheme uses an authenticated encryption (AE) function to encrypt a hidden portion of a message to be signed while creating a message authentication code (MAC) on the hidden portion that shall be used by a verifier to verify the signed message.

In another example, a MAC-then-Encrypt - Pintsov Vanstone (ME-PV) scheme uses a MAC function to obtain a MAC on the hidden portion of the message to be signed, followed by an encryption function to encrypt a combination of the hidden portion and the MAC, such that the MAC may be used by the verifier to verify the signed message. In a variation, an Encrypt-then-MAC - Pintsov Vanstone (EM-PV) scheme uses the encryption function to encrypt the hidden portion of the signed message first, followed by the MAC function to obtain a MAC on the encryption result.

In yet another example, an Authenticated Encryption with Associated Data - Pintsov Vanstone (AEAD-PV) scheme uses an authenticated encryption with associated data (AEAD) function to encrypt the hidden portion of the message and to create a MAC on both the hidden portion and on non-encrypted associated data in the message, thereby allowing for authentication of both the hidden portion and the associated data.

BRIEF DESCRIPTION OF THE DRAWINGS

The figures of the accompanying drawings are intended to illustrate by way of example and not limitation. Like reference numbers in the figures indicate corresponding, analogous or similar elements.

Figure 1 is a simplified block diagram of an example authenticated encryption signature scheme for a signer and a verifier;

Figure 2 is a simplified flowchart of a first example method for applying a signature to a message to generate a signed message;

Figure 3 is a simplified flowchart of a first example method for verifying a signed message signed by a signer;

Figure 4 is a simplified flowchart of a second example method for applying a signature to a message to generate a signed message;

Figure 5 is a simplified flowchart of a second example method for verifying a signed message signed by a signer;

Figure 6 is a simplified flowchart of a third example method for applying a signature to a message to generate a signed message;

Figure 7 is a simplified flowchart of a third example method for verifying a signed message signed by a signer;

Figure 8 is a simplified flowchart of a fourth example method for applying a signature to a message to generate a signed message;

Figure 9 is a simplified flowchart of a fourth example method for verifying a signed message signed by a signer; and

Figure 10 is a simplified block diagram of an example signer device and an example verifier device.

DETAILED DESCRIPTION

While the signature schemes described herein are instantiated using a group of points on an elliptic curve, they could alternatively be instantiated using any finite cyclic group, for example, a subgroup of $\mathbb{Z}p$, the group of integers modulo a prime number $p$. In this case, the group order may $be$ $p-1$ and a generator $G$ generates a subgroup of order $n$, where $n$ divides $p - 1$. Traditionally, arithmetic in subgroups of $\mathbb{Z}p$ is written multiplicatively, where the product of two elements $P$ and $Q$ is $PQ$, and the analogue of scalar multiplication in elliptic curve groups by an integer $k$ is exponentiation, that is, $P^k$.

Protocols based on elliptic curve cryptography (ECC) rely on the intractability of the elliptic curve discrete logarithm problem. Given publicly-known points $G$ and $Q$ on an elliptic curve $E$, where point $Q$ is equal to a product of a scalar multiplying factor $d$ and point $G$, that is $Q = dG$, it is conjecturally very difficult to determine scalar multiplying factor $d$. With known algorithms, the computational difficulty of solving this problem increases exponentially with the size of the subgroup generated by $G$.

To implement an ECC-based protocol, all participants agree on the domain parameters of the elliptic curve. An elliptic curve $E$ defined over a prime finite field $\mathbb{F}p$, that is $E(\mathbb{F}p)$, is defined by elliptic curve domain parameters $D = (p, a, b, G, n, h)$, where $p$ is an odd prime number that represents the number of elements in the field, integers $a$ and $b$ are elements of prime finite field $\mathbb{F}p$ that satisfy for example $4a^3 + 27b^2 \neq 0$ (mod p), (however curves specified by another equation may be suitable), $G$ is a base point or generator on elliptic curve $E(\mathbb{F}p)$ that has order $n$, and cofactor $h$ is a relatively small integer that is defined as a ratio of the number of points $\#E(\mathbb{F}p)$ on elliptic curve $E(\mathbb{F}p)$ over $n$. Arithmetic in subgroups of $E(\mathbb{F}p)$ may be written additively, where the sum of two points $P$ and $Q$ is $P + Q$, and scalar multiplication by an integer $k$ is $kP$. Further details of existing ECC-based protocols are described in "Standards for Efficient Cryptography SEC1: Elliptic Curve Cryptography", Certicom Research, Certicom Corp., 2000, and "Standards for Efficient Cryptography SEC2: Recommended Elliptic Curve Domain Parameters version 2.0", Certicom Research, Certicom Corp., 2000. Elliptic curves can also be defined over the finite field $F_2m$, which is a binary representation with $2^m$ elements, rather than over a prime finite field $\mathbb{F}p$, and the techniques described in this document can be modified to suit elliptic curves defined over the finite field $F_2m$.

The Elliptic Curve Pintsov-Vanstone Signature (ECPVS) scheme provides a digital signature scheme with partial message recovery. The ECPVS scheme has been used to provide a level of confidentiality by enabling a portion of the message being signed to be embedded or "hidden" within one of the resultant signature components. ECPVS can be used by a signer to generate a digital signature on data and by a verifier to verify the authenticity of the signature and to recover the portion of the message hidden within the signature. A private key of the signer is used in the signature generation process, and the corresponding public key is used in the signature verification process. In order for the hidden portion of the message to remain confidential, the public key of the signer needs to be kept secret.

The term "signer" as used herein refers to any computerized device able to generate a digital signature on data. The term "verifier" as used herein refers to any computerized device able to verify the authenticity of a digital signature.

One aspect of the ECPVS scheme is the selection by the signer of message redundancy criteria for a hidden portion of a message to be signed, where the redundancy criteria are known by the verifier in order to verify the signed message. Examples of redundancy criteria include that the message is an ASCII file, that the message is in a specific format, that the message contains certain key words, or that each paragraph ends with a period. The amount of total redundancy is a scalable security parameter which is chosen to achieve security objectives. Given sufficient redundancy, it should be infeasible for a forger to produce a valid signature on a message which satisfies the redundancy criteria. The more redundancy there is in the hidden portion of the message to be signed, the higher the level of security, and the longer the signed message to be transmitted. Consequently, selection of an appropriate cryptographic signature may involve a tradeoff between security requirements and storage/transmission requirements.

A framework for using authenticated encryption in digital signatures with message recovery is herein proposed whereby the ECPVS scheme is modified to remove the redundancy criteria on the hidden portion of a message to be signed. proposed framework can be applied to signature generation and signature verification.

In one example, an Authenticated Encryption - Pintsov Vanstone (AE-PV) scheme uses an authenticated encryption (AE) function to encrypt a hidden portion of a message to be signed while creating a message authentication code (MAC) on the hidden portion that shall be used by a verifier to verify the signed message.

In another example, a MAC-then-Encrypt - Pintsov Vanstone (ME-PV) scheme uses a MAC function to obtain a MAC on the hidden portion of the message to be signed, followed by an encryption function to encrypt a combination of the hidden portion and the MAC, such that the MAC may be used by the verifier to verify the signed message. In a variation, an Encrypt-then-MAC - Pintsov Vanstone (EM-PV) scheme uses the encryption function to encrypt the hidden portion of the signed message first, followed by the MAC function to obtain a MAC on the encryption result.

In yet another example, an Authenticated Encryption with Associated Data - Pintsov Vanstone (AEAD-PV) scheme uses an authenticated encryption with associated data (AEAD) function to encrypt the hidden portion of the message and to create a MAC on both the hidden portion and on non-encrypted associated data in the message, thereby allowing for authentication of both the hidden portion and the associated data.

The framework proposed herein may also be applied to keyed ECPVS and other signcryption techniques.

In the following examples, it may be assumed, unless otherwise stated, that a signer and a verifier in a signature scheme have agreed on suitable domain parameters. For example, for a signature scheme instantiated using a group of points on an elliptic curve, the signer and the verifier agree on the corresponding elliptic curve domain parameters, including a base point G.

As previously described, while the Pintsov-Vanstone (PV) signature schemes described herein are instantiated using a group of points on an elliptic curve, the schemes may be instantiated using any finite cyclic group. In this case, the signer and the verifier would have to agree on domain parameters associated with that group, including a generator G.

The signer and the verifier using a particular signature scheme agree on the functions and parameters associated with that scheme. For example, with an Authenticated Encryption - Pintsov Vanstone (AE-PV) scheme, the signer and the verifier agree on an authenticated encryption (AE) function keyed by an integer $k_1$ that is able to take a message $M$ as input and output an encrypted value $c_1$ and a message authentication code (MAC) $mac$, that is $AE_{k1}(M) = (c_1, mac)$. The signer and the verifier also agree on an authenticated decryption (AD) function which is a reverse transformation of $AE$ that is keyed by an integer $k_1$ and that takes an encrypted value $c_1'$ and a MAC $mac'$ as inputs and outputs either the message $M$ and an indication of validity, or null and an indication of invalidity, that is $AD_{k1}(c_1', mac') = (M, VALID)$ or $AD_{k1}(c_1', mac') = (NULL, INVALID)$. The signer and the verifier also agree on the bit lengths of key $k_1$ and on the bit length of MAC $mac$.

The signer and the verifier agree on a suitable key derivation function (KDF). For example, with the (AE-PV) scheme, the KDF is able to be used to construct a key suitable for use with authenticated encryption function $AE_{k1}$ and authenticated decryption function $AD_{k1}$. Any ANSI-X9-approved key derivation function may be used, for example, the KDFs described in "NIST SP 800-108 Recommendation for Key Derivation Using Pseudorandom Functions", National Institute of Standards and Technology, 2009.

In examples where a hash function is to be used as part of a signature scheme, the signer and the verifier agree on a cryptographic hash function which maps arbitrary length inputs to fixed-length outputs. Example hash functions include the SHA-2 family as described in "FIPS PUB 180-3 Federal Information Processing Standards Publication: Secure Hash Standard (SHS)", National Institute of Standards and Technology, 2008.

The signer and the verifier agree on encoding methods to communicate values, including integers and group elements. An example encoding method is ASN.1 described by Dubuisson in "ASN.1 Communication Between Heterogeneous Systems", Morgan Kaufmann, 2000. The signer and the verifier also agree on a common encoding of lists of values as bitstrings prior to hashing them. For example, they may agree (1) to convert all values to octet strings, and then (2) to hash a concatenation of the octet strings. As with hashing, an encoding may be performed before deriving keys. With both the KDF and hash function, encoding may incorporate additional information, for example, date, time, name of signer, name of verifier, or contact information related to the message being signed.

For security of a signature scheme, the domain parameters should be chosen carefully. Further details of parameter choices for Pintsov Vanstone signature schemes may be found in "IEEE P1363a/D2, Standard Specifications for Public Key Cryptography: Pinstov Vanstone Signatures with Message Recovery", Institute of Electrical and Electronics Engineers, 2000. It should also be noted that, for security, a signer may comprise a secure random or pseudo-random number generator for generating keys and signed messages.

As described previously, a public key of the signer that corresponds to a private key that was used in the signature generation process is known to the verifier for verification of a signed message. Furthermore, for those implementations where the hidden portion of the message is to remain confidential, the public key of the signer should not be disclosed to other entities.

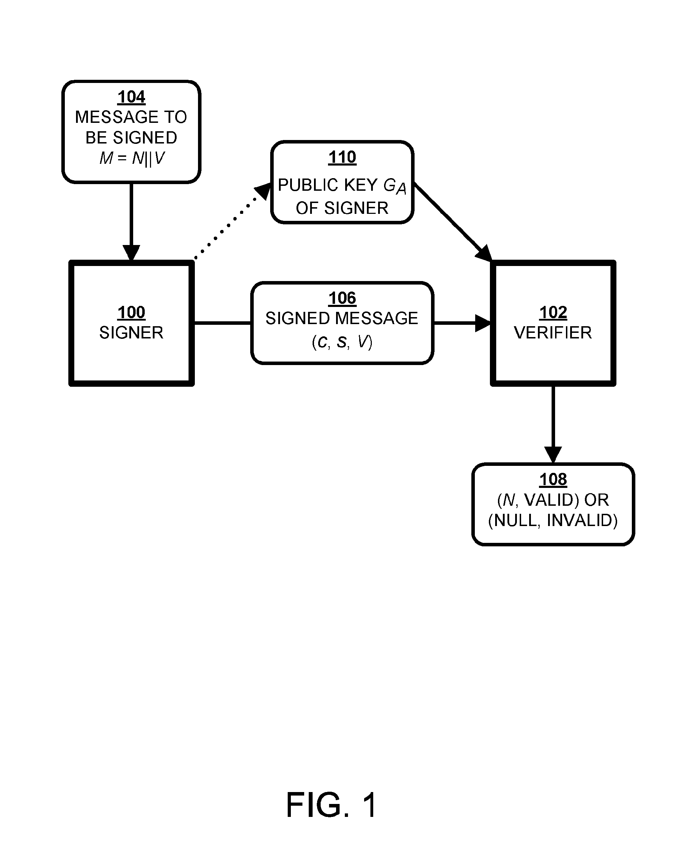

Figure 1 is a simplified block diagram of an example scheme for authenticated encryption for digital signatures with message recovery for a signer 100 and a verifier 102. Signer 100 is to sign a message $M$ 104 which comprises a hidden portion N and a visible portion $V$. Hidden portion N is the portion of message $M$ 104 that is to be embedded or "hidden" in a part of the signature. Signer 100 is to apply a signature to message $M$ 104 to obtain a signed message 106 which is to be transmitted to verifier 102. Signed message 106 comprises at least a first signature component $c$, a second signature component s, and visible portion $V$ of message $M$ 104. In order for verifier 102 to verify signed message 106, verifier 102 is in possession of a public key $G_A$ 110 of signer 100. Public key $G_A$ 110 may be received directly from signer 100 as shown by the dotted line in Figure 1 or may be received from a trusted entity (not shown) such as a certificate authority. For those implementations where hidden portion N of message $M$ 104 is to remain confidential, this may be achieved by ensuring the confidentiality of public key $G_A$ 110. The result of the authenticated decryption of signed message 106 performed by verifier 102 is shown at 108. If signed message 106 is verified, hidden portion N of message $M$ 104 is recovered and accompanied by an indication of validity. If signed message 106 is not verified, hidden portion N is not recovered and there is an indication of invalidity.

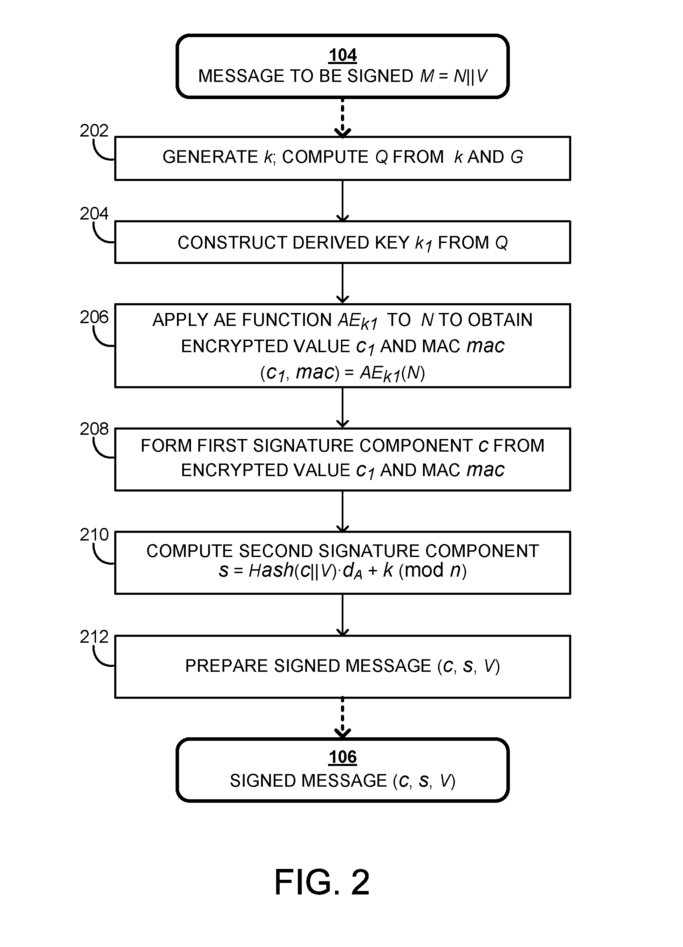

Figure 2 is a simplified flowchart of an example authenticated encryption method to be performed by a signer, for example, signer 100, for applying a signature to message $M$ 104 to generate a signed message 106. At 202, the signer generates a first value k that is a private value of the signer which should not be disclosed to other entities. From this first value $k$ and a base point $G$ on an elliptic curve, the signer calculates a second value $Q$ that is equal to a scalar product of first value $k$ and base point $G$, according to equation 1:

$$Q = k \cdot G. \tag{1}$$

In some implementations, the pair $(k,Q)$ is ephemeral. That is, a new pair $(k,Q)$ is generated for each message $M$ to which a signature is to be applied.

At 204, the signer constructs a derived key $k_1$ from second value $Q$. For example, derived key $k_1$ may be constructed by applying a key derivation function $KDF$ to second value $Q$, according to equation 2:

$$k_1 = KDF(Q). \tag{2}$$

At 206, the signer applies an AE function keyed by derived key $k_1$, that is $AE_{k1}$, to hidden portion $N$ of message $M$ 104 to obtain an encrypted value $c_1$ and a Message Authentication Code (MAC) *mac* of a prerequisite length $L$, where length $L$ is a parameter of authenticated encryption function $AE$. This is shown in equation 3:

$$(c_1, mac) = AE_{k1}(N). \tag{3}$$

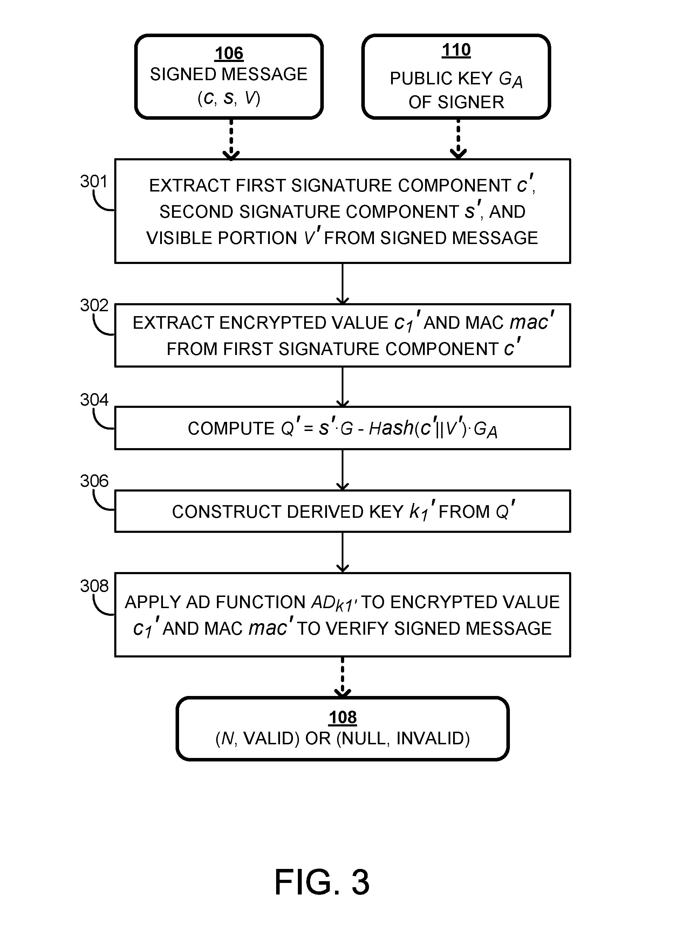

The AE function is used to encrypt hidden portion $N$ of message $M$ 104 and to create a MAC $mac$ that can be used by a verifier for subsequent verification of signed message 106. An adversary who does not know derived key $k_1$, but observes a number of [encrypted value, MAC] pairs output by authenticated encryption function $AE_{k1}$ should not be able to output a new [encrypted value, MAC] pair that could be used by the verifier to successfully verify signed message 106 and recover hidden portion $N$ of message $M$ 104. Authenticated decryption is described in more detail with respect to Figure 3.

One possible AE function that may be used is the Advanced Encryption Standard (AES) with Counter Mode Encryption (CME) and Cipher Block Chaining (CBC), also known as AES-CCM, which is described in "NIST SP 800-38C Recommendation for Block Cipher Modes of Operation: The CCM Mode for Authentication and Confidentiality", National Institute of Standards and Technology, 2007. Another possible AE function that may be used is AES with Galois Counter Mode (AES-GCM), which is described in "NIST SP 800-38D Recommendation for Block Cipher Modes of Operation: The Galois/Counter Mode (GCM) and GMAC", National Institute of Standards and Technology, 2007. Details of the AES are described in "FIPS PUB 197 Advanced Encryption Standard (AES)", Federal Information Processing Standards, 2001, and Section 7.2.2 of "Handbook of Applied Cryptography", CRC Press, ISBN 0-8493-8523-7. Yet another possible AE function that may be used is AES Key Wrap, which is described in "AES Key Wrap Specification", National Institute of Standards and Technology, November 2001, and variants thereof. The Accredited Standards Committee, X9, Inc. (ASC X9) has defined four algorithms in its draft standard published November 2004. Any of those four algorithms is a suitable AE function that may be used: AESKW (a variant of the AES Key Wrap Specification), TDKW (similar to AESKW, but using Triple DES as the underlying block cipher instead of AES), AKW1 (essentially the algorithm proposed in the Internet Engineering Task Force Request For Comment 3217), and AKW2 (the algorithm that is implicitly defined in a "key block" specification that has been developed for use in constrained legacy systems in the financial services industry). It is also contemplated to use an AE function that does not explicitly output a MAC value upon encryption but still provides authentication. For example, such an AE function, when applied to an input $I$, outputs an encrypted value $AE_{k1}(1)$ but does not output any MAC, and its associated authenticated decryption function AD, when applied to an input $I'$, outputs either that $I'$ is not valid, or $I$ and an indication that $I$ is valid.

Returning to Figure 2, at 208, the signer forms a first signature component $c$ from encrypted value $c_1$ and MAC $mac$. First signature component c may be, for example, a concatenation of encrypted value $c_1$ and MAC $mac$, as shown in equation 4:

$$c = c_1 \| mac \tag{4}$$

Alternatively, first signature component c may be a concatenation of MAC $mac$ and encrypted value $c_1$, that is, $c = mac \| c_1$. More generally, first signature component c may be a result of applying any reversible function f to encrypted value $c_1$ and MAC $mac$, that is, $c = f(c_1, mac)$, where $f$ is agreed on by the signer and the verifier. It will also be understood by a person of ordinary skill in the art that certain non-reversible functions may be used. For example, a function $f$ that takes three elements x, y, and z as input, and outputs a concatenation of $x$ and $y$, that is $f(x,y,z) = x \| y$, is not reversible because the output contains no information about element z. However, this function could still be used.

At 210, the signer computes a second signature component s, according to equation 5:

$$s = Hash(c \| V) \cdot d_A + k \ (\mathrm{mod} \ n), \tag{5}$$

where $Hash$ is a cryptographic hash function as described previously, and $d_A$ is a private key of the signer, with a corresponding public key $G_A$ having been computed as a product of private key $d_A$ and base point $G$, that is $G_A = d_A \cdot G$.

While not explicitly shown in the figures, other methods of calculating second signature component $s$ are contemplated. For example, second signature component $s$ could be calculated by switching the positions of private key $d_A$ and first value $k$ in equation 5, that is $s = Hash(c \| V) \cdot k + d_A \ (\mathrm{mod} \ n)$. Alternatively, either of the terms in either one of these equations could be negated. If second signature component *s* is calculated using such a modification of equation 5, the verification procedure is changed accordingly.

Although not explicitly shown, *Hash(c∥V)* is converted to an integer for use in equation 5 or any of the alternatives to equation 5.

The expression *c∥V* denotes a concatenation of first signature component *c* and visible portion *V* of message *M* 104. Alternatively, visible portion *V* may be concatenated with first signature component *c*, that is *V∥c*. More generally, first signature component *c* may be combined with visible portion *V* using any reversible function g, that is, *g (c, V)*, where g is agreed on by the signer and the verifier. As described previously with respect to equation 4, certain non-reversible functions may also be used.

At 212, the signer prepares signed message 106, the signed message 106 comprising first signature component c, second signature component s, and visible portion *V* of message *M* 104. While first signature component *c* and visible portion *V* are shown as separate elements of signed message 106, it is contemplated that they may also be combined using reversible function g as was done during the computation of second signature component s at 210. For example, if first signature component c and visible portion *V* were concatenated as shown in equation 5, signed message 106 may comprise the same concatenation that is *c∥V*.

Figure 3 is a simplified flowchart of an example authenticated decryption method to be performed by a verifier, for example, verifier 102, for verifying a signed message, for example, signed message 106, which is purported to be signed by a signer, for example, signer 100.

At 301, the verifier extracts first signature component *c'*, second signature component *s'*, and visible portion *V'* of message *M* 104 from signed message 106. **The apostrophe is used to indicate a value that has not yet been verified.** As described previously, if first signature component c and visible portion *V* have been combined using reversible function g, the inverse of function g, that is $g^{-1}$, will be necessary to extract first signature component *c'* and visible portion *V'* from signed message 106.

At 302, the verifier extracts encrypted value $c_1'$ and MAC *mac'* from first signature component *c'* using prerequisite length *L* associated with authenticated encryption function *AE*, which has been agreed on by the signer and the verifier. For example, if first signature component *c* was defined as the concatenation of encrypted value $c_1$ and MAC *mac* as shown in equation 4, the verifier can determine encrypted value $c_1'$ by defining the last *L* bits of first signature component *c'* as MAC *mac'*, such that the remaining bits at the beginning of first signature component c' correspond to encrypted value $c_1'$.

If encrypted value $c_1$ and MAC *mac* have been combined using some other reversible function f as described previously, the inverse of function *f*, that is $f^{-1}$, will be necessary to extract encrypted value $c_1'$ and MAC *mac'* from first signature component *c'*.

It should be noted that the extraction described at 302 could be performed at any time prior to applying the authenticated decryption function at 308, as described in more detail below.

At 304, the verifier computes a value *Q'*, according to equation 6:

$$Q' = s' \cdot G - Hash(c' \| V') \cdot G_A, \tag{6}$$

where *Hash* is the same cryptographic hash function used by the signer to compute second signature component *s* at 210 as shown in equation 5. As previously described, if second signature component s has been calculated using a modification of equation 5, equation 6 will need to be modified accordingly. As in equation 5, *Hash(c∥V)* is converted to an integer for use in equation 6. Public key $G_A$ 110 may be received directly from signer or may be received from a trusted entity, such as a certificate authority. As previously described, other combinations of first signature component c' and visible portion *V'* are contemplated in place of the concatenation *c'∥V* shown in equation 6, provided the combination used in equation 6 corresponds to that used in computing second signature component s in equation 5.

At 306, the verifier constructs a derived key $k_1'$ from value *Q'* using the same method used by the signer to construct derived key $k_1$ at 204. For example, if the signer has used key derivation function *KDF* to construct derived key $k_1$ as shown in equation 2, the verifier is to construct derived key $k_1'$ according to equation 7:

$$k_1' = KDF(Q'). \tag{7}$$

At 308, the verifier applies an AD function that is a reverse transformation of the AE function that was used by the signer at 206. The AD function, which is keyed by derived key $k_1'$ and denoted $AD_{k_1'}$, may be used to verify signed message 106 and recover hidden portion $N$ of message 104. Result 108 of the AD function depends on whether the verifier is able to verify signed message 106. If the verifier determines that signed message 106 is valid, result 108 comprises recovered hidden portion $N$ of message $M$ 104 and an indication of validity. If the verifier determines that signed message 106 is invalid, result 108 comprises only an indication of invalidity, without hidden portion $N$.

Instead of jointly creating encrypted value $c_1$ and MAC *mac* using an AE function as described in equation 3 and shown at 206, the encryption and creation of a MAC can be performed as two separate steps. There are at least two variants of this which will be referred to as: (1) MAC-then-Encrypt (ME), and (2) Encrypt-then-MAC (EM). (There is also an Encrypt-and-MAC variant. However, given that the Encrypt-and-MAC variant is only secure for specific choices of encryption function and MAC function, the Encrypt-and-MAC variant is not explicitly described.)

Both the encryption function and the MAC function may be secure functions. Examples of secure encryption functions include AES with Cipher Block Chaining (AES-CBC) and AES Counter Mode (AES-CTR) as described in "NIST SP 800-38A Recommendation for Block Cipher Modes of Operation", National Institute of Standards and Technology, 2001. Examples of secure MAC functions include AES Cipher Block Chaining Message Authentication Code (AES-CBC-MAC) as described in "ISO/IEC 9797 Data Cryptographic Techniques - Data integrity mechanism using a cryptographic check function employing a block cipher algorithm", International Organization for Standardization, 1989, and AES Cipher-based MAC (AES-CMAC) as described in "NIST SP 800-38B Recommendation for Block Cipher Modes of Operation: The CMAC Mode for Authentication", National Institute of Standards and Technology, 2005. The encryption function and MAC function are agreed on by the signer and the verifier.

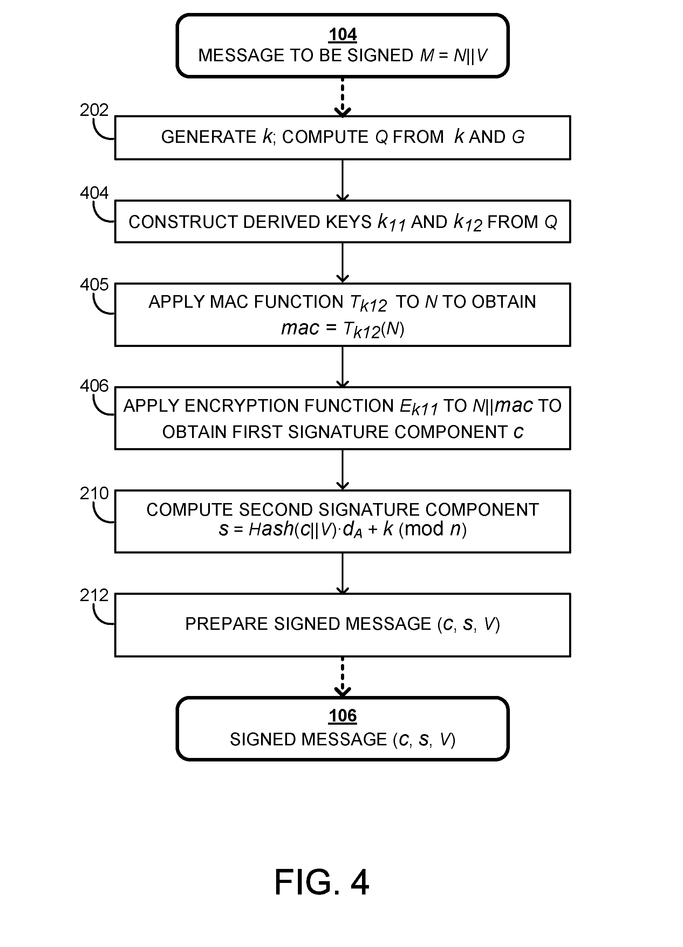

Figure 4 is a simplified flowchart of an example MAC-then-Encrypt variant of the AE method illustrated in Figure 2 for message $M$ 104. As described with respect to Figure 2, the example method illustrated in Figure 4 includes generation of first value $k$ and computation of second value $Q$ at 202. As described with respect to Figure 2, in some implementations the pair $(k, Q)$ is ephemeral. That is, a new pair $(k, Q)$ is generated for each message $M$ to which a signature is to be applied. However, in this method, the signer constructs a first derived key $k_{11}$ and a second derived $k_{12}$ from value $Q$ at 404. For example, derived keys $k_1$ and $k_2$ may be constructed by applying a key derivation function $KDF$ to second value $Q$, according to equation 8:

$$(k_1, k_2) = KDF(Q), \qquad\qquad (8)$$

where the output of $KDF$ is longer than the output of the KDF used in equation 2, such that the output may be divided into first derived key $k_{11}$ and second derived $k_{12}$. Alternatively, first derived key $k_{11}$ and second derived $k_{12}$ could be constructed by applying a KDF to second value $Q$ twice, using different auxiliary information for each application. While it is possible to apply a KDF to second value $Q$ twice without using different auxiliary information for each application, this may not be advisable for security reasons.

At 405, the signer applies a MAC function $T$ keyed by second derived key $k_{12}$, that is $T_{k12}$, to hidden portion $N$ of message $M$ 104 to obtain a MAC *mac*, according to equation 9:

$$mac = T_{k12}(N), \qquad\qquad (9)$$

where MAC *mac* has a prerequisite length $L$ which is a parameter of MAC function $T$.

At 406, the signer applies an encryption function $E$ keyed by first derived key $k_{11}$, that is $E_{k11}$, to a combination of hidden portion $N$ and MAC *mac* to obtain a first signature component $c$, according to equation 10:

$$c = E_{k11}(N\|mac). \qquad\qquad (10)$$

The expression $N\|mac$ denotes a concatenation of hidden portion $N$ and MAC *mac*. Alternatively, MAC *mac* may be concatenated with hidden portion $N$, that is $mac\|N$. More generally, hidden portion $N$ may be combined with MAC *mac* using any reversible function $j$, that is $j(N, mac)$, where $j$ is agreed on by the signer and the verifier. As described previously with respect to equation 4, certain non-reversible functions may also be used.

Upon obtaining first signature component c at 406, the method proceeds as described with respect to Figure 2, with the signer computing second signature component s at 210, and preparing signed message 106 at 212.

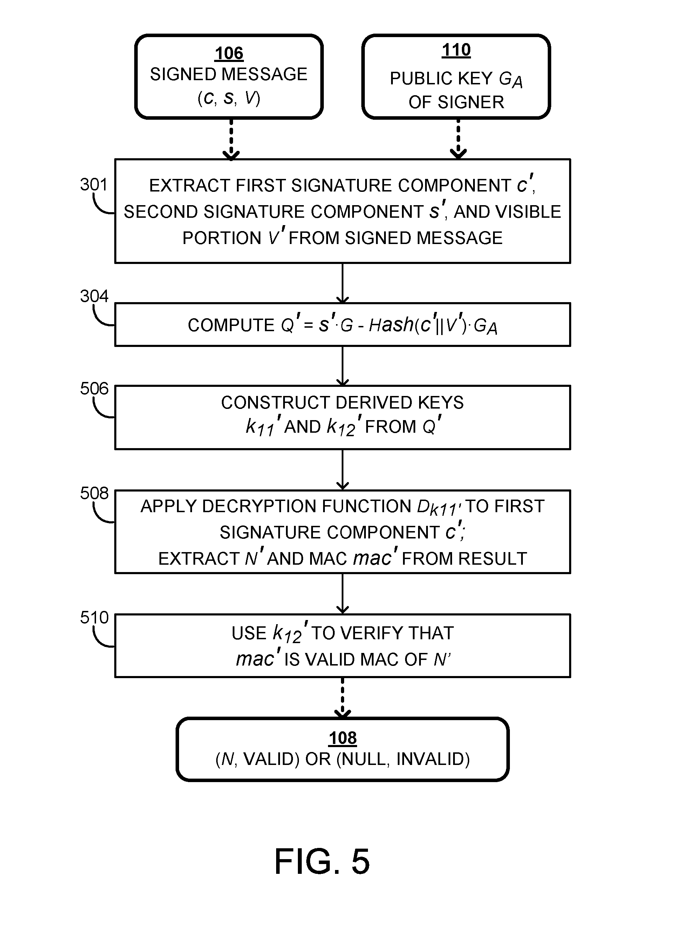

Figure 5 is a simplified flowchart of an example Decrypt-then-Verify variant of the AD method illustrated in Figure 3. As described with respect to Figure 3, the example method illustrated in Figure 5 includes extraction of first signature component c', second signature component s', and visible portion V' from signed message 106 at 301. **The apostrophe is used to indicate a value that has not yet been verified.** At 304, the verifier computes value $Q'$ using public key $G_A$ 110. At 506 the verifier constructs a first derived key $k_{11}'$ and a second derived key $k_{12}'$ from value $Q'$ using the same method used by the signer to construct first derived key $k_{11}$ and second derived key $k_{12}$ at 404.

To decrypt first signature component $c'$, the verifier applies a decryption function $D$ to first signature component $c'$ at 508, where decryption function $D$ is a reverse transformation of encryption function $E$ that was used by the signer at 406. The decryption function is keyed by first derived key $k_{11}'$ and is denoted $D_{k_{11}'}$. This is shown in equation 11:

$$N'\|mac' = D_{k11'}(c),\qquad\qquad(11)$$

where $N'\|mac'$ denotes a concatenation of a hidden portion $N'$ of signed message 106 and a MAC $mac'$. The verifier is able to extract hidden portion N' and MAC $mac'$ from the concatenation $N'\|mac'$ using prerequisite length $L$ associated with MAC function $T$ agreed on by the signer and the verifier. If hidden portion $N$ and MAC $mac$ were combined at 406 using some other reversible function $j$ as described previously, the inverse of function $j$, that is $j^{-1}$, will be necessary to obtain hidden portion N' and MAC $mac'$.

At 510, the verifier uses second derived key $k_{12}'$ to verify that MAC $mac'$ *is* a valid MAC of hidden portion $N'$ of signed message 106, and accordingly determines whether signed message 106 is valid. As described previously with respect to Figure 3, if the verifier determines that signed message 106 is valid, result 108 comprises recovered hidden portion $N$ of message $M$ 104 and an indication of validity. If the verifier determines that signed message 106 is invalid, result 108 comprises only an indication of invalidity, without hidden portion $N$.

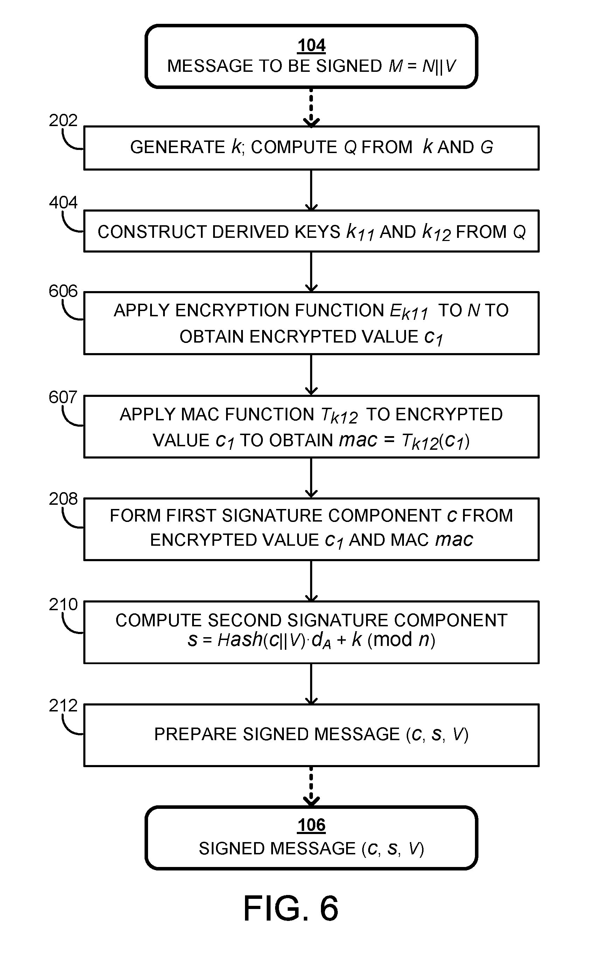

It is also contemplated that an Encrypt-then-MAC/Verify-then-Decrypt variant could be used as an alternative to the MAC-then-Encrypt/Decrypt-then-Verify variant. Figure 6 is a simplified flowchart of an example Encrypt-then-MAC variant of the AE method illustrated in Figure 2 for message $M$ 104. As described with respect to Figure 2, the example method illustrated in Figure 6 includes generation of first value $k$ and computation of second value $Q$ at 202, such that $Q = k \cdot G$. As described with respect to Figure 2, in some implementations the pair $(k, Q)$ is ephemeral. That is, a new pair $(k,Q)$ is generated for each message $M$ to which a signature is to be applied. Then, as described with respect to Figure 4, the signer constructs first derived key $k_{11}$ and second derived $k_{12}$ from value $Q$ at 404.

At 606, the signer applies an encryption function $E$ keyed by first derived key $k_{11}$, that is $E_{k_{11}}$, to hidden portion $N$ to obtain an encrypted value $c_1$, according to equation 12:

$$c_1 = E_{k11}(N)\qquad\qquad(12)$$

At 607, the signer applies a MAC function $T$ keyed by second derived key $k_{12}$, that is $T_{k12}$, to encrypted value $c_1$ to obtain a MAC $mac$, according to equation 13:

$$mac = T_{k12}(c_1),\qquad\qquad(13)$$

where MAC $mac$ has a prerequisite length $L$ which is a parameter of MAC function $T$.

Upon obtaining MAC $mac$ at 607, the method proceeds as described with respect to Figure 2, with the signer forming first signature component c from encrypted value $c_1$ and MAC $mac$ at 208, computing second signature component s at 210, and preparing signed message 106 at 212.

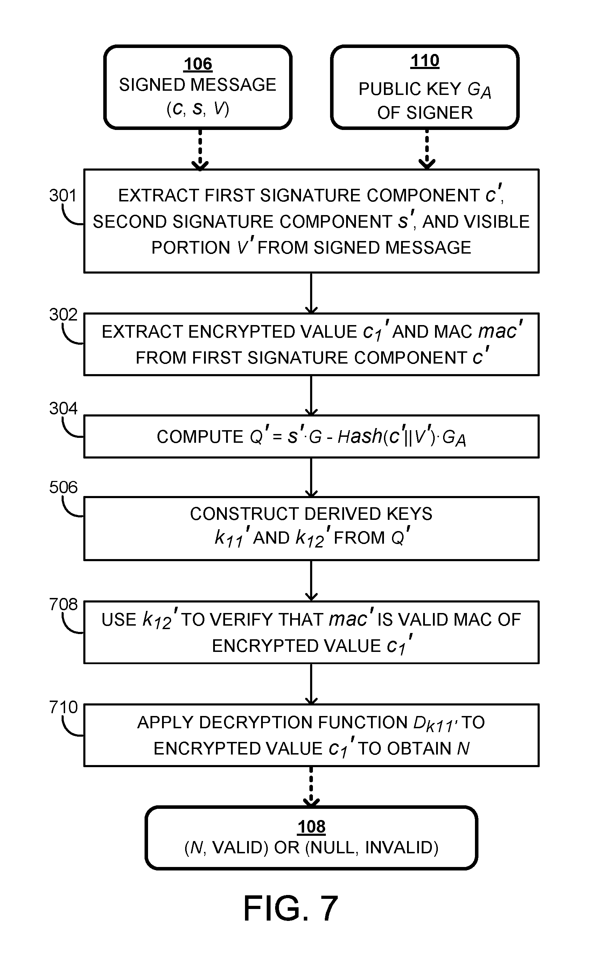

Figure 7 is a simplified flowchart of an example Verify-then-Decrypt variant of the AD method illustrated in Figure 3. As described with respect to Figure 3, the example method illustrated in Figure 7 includes extraction of first signature component c', second signature component s', and visible portion V from signed message 106 at 301, extraction of encrypted value $c_1$' and MAC mac' from first signature component c' at 302, and computation of value Q' at 304 using public key $G_A$ 110. **The apostrophe is used** to **indicate a value that has not yet been verified.** As described with respect to Figure 5, at 506 the verifier constructs a first derived key $k_{11}$' and a second derived key $k_{12}$' from value Q' using the same method used by the signer to construct first derived key $k_{11}$ and second derived key $k_{12}$ at 404.

At 708, the verifier uses second derived key $k_{12}$' to verify that MAC mac' is a valid MAC of encrypted value $c_1$', and accordingly determines whether signed message 106 is valid.

If the verifier determines that MAC mac' is a valid MAC of encrypted value $c_1$', the verifier proceeds to apply a decryption function D to encrypted value $c_1$' at 710, where the decryption function is a reverse transformation of encryption function E that was used by the signer at 606. The decryption function is keyed by first derived key $k_{11}$' and is denoted $D_{k11'}$. This is shown in equation 14:

$$N = D_{k11'}(c_1').  \qquad (14)$$

Because the verifier has already determined at 708 that MAC mac' is a valid MAC of encrypted value $c_1$', and consequently that signed message 106 is valid, result 108 comprises recovered hidden portion N of message M 104 and an indication of validity.

If the verifier determines at 708 that MAC mac' is not a valid MAC of encrypted value $c_1$', the verifier does not apply decryption function D at 710, and result 108 comprises only an indication of invalidity, without hidden portion N.

In another example, Authenticated Encryption with Associated Data (AEAD) can be used as part of a Pintsov-Vanstone signature scheme with message recovery. For example, the AE function could be replaced by an AEAD function. AEAD is described in more detail by Rogaway in "Authenticated encryption with associated data", Proceedings of ACM CCS'02: 98-107, ACM, New York, 2002.

Similarly to the AE-PV, ME-PV, and EM-PV schemes, an AEAD - Pintsov Vanstone (AEAD-PV) scheme can be used to encrypt a hidden portion N of a message M that is to be embedded or hidden in the signature and to provide authenticity and confidentiality to that portion of the message. The AEAD-PV scheme uses the AEAD function to guarantee the authenticity of a visible portion V of the message (and thus may avoid use of a hash function). In many settings there are data associated with an encrypted value that is public to allow processing or routing of a message by intermediate parties who are not in possession of the encryption key. Using an AEAD function in place of an AE function in the previously described signature scheme has an advantage that a hash function is not involved.

The AEAD-PV scheme includes that the signer and the verifier agree on an AEAD function keyed by an integer $k_1$ that is able to take a hidden portion N and a visible portion V as inputs and to output an encrypted value $c_1$ and a MAC mac, that is $AEAD_k(N, V) = (c_1, mac)$. The signer and the verifier also agree on an Authenticated Decryption with Associated Data (ADAD) function which is a reverse transformation of AEAD that is keyed by an integer $k_1$' and that takes an encrypted value $c_1$' and a MAC mac' as inputs and outputs either the hidden portion N and an indication of validity, or null and an indication of invalidity, that is $ADAD_{k1'}(c_1', mac', V) = (N, VALID)$ or $ADAD_{k1'}(c_1', ', mac', V) = (NULL, INVALID)$. The signer and the verifier also agree on the bit length of key $k_1$ and on the bit length of MAC mac . An example AEAD scheme suitable for use in the proposed framework is described by Kohno et al. in "CWC: A High-Performance Conventional Authenticated Encryption Mode", Proceedings of Fast Software Encryption 2004 (FSE'04), LNCS 3017: 408-426, 2004.

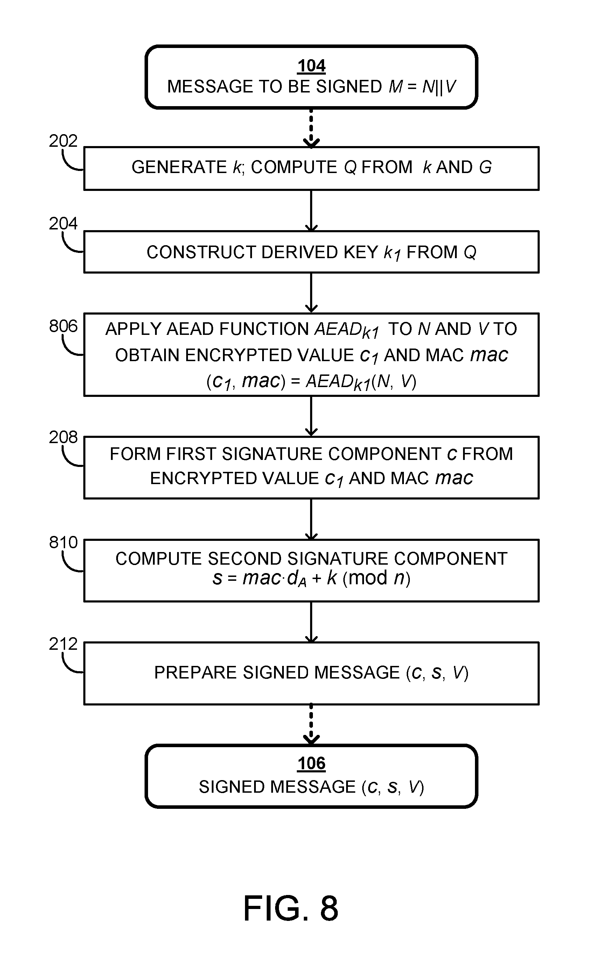

Figure 8 is a simplified flowchart of an example Authenticated Encryption with Associated Data (AEAD) method to be performed by a signer, for example, signer 100, for applying a signature to message 104 to generate a signed message 106. As described with respect to Figure 2, at 202, the signer generates a first value k and calculates a second value Q, such that $Q = k \cdot G$. As described with respect to Figure 2, in some implementations the pair (k, Q) is ephemeral. That is, a new pair (k,Q) is generated for each message M to which a signature is to be applied. At 204, the signer constructs a derived key $k_1$ from second value Q.

At 806, the signer applies an AEAD function keyed by derived key $k_1$, that is $AEAD_{k1}$, to hidden portion N of message M 104 and visible portion V of message M 104 to obtain an encrypted value $c_1$ and a MAC mac of a prerequisite length L, where length L is a parameter associated with AEAD which has been agreed on by the signer and the verifier. This is shown in equation 15:

$$(c_1, mac) = AEAD_{k1}(N, V). \qquad (15)$$

The AEAD function is used to encrypt hidden portion $N$ of message $M$ 104 and to create a MAC that can be used by a verifier for subsequent verification of signed message 106. In particular, application of the AEAD function may be used to guarantee the authenticity of visible portion $V$, without involving a hash function, as described in more detail below.

After obtaining encrypted value $c_1$ and MAC $mac$ at 806, the signer proceeds as described with respect to Figure 2 to form a first signature component c from encrypted value $c_1$ and MAC $mac$ at 208.

At 810, the signer computes a second signature component s, according to equation 16:

$$s = mac \cdot d_A + k \ (\mathrm{mod} \ n), \qquad (16)$$

where MAC $mac$ has been converted to an integer for use in equation 16. A comparison of equation 16 to equation 5 reveals that the hash function of the AE-PV, ME-PV, and EM-PV authenticated encryption methods is not involved in AEAD-PV encryption.

While not explicitly shown in Figure 8, other methods of calculating second signature component s are contemplated. For example, second signature component s could be calculated by switching the positions of private key $d_A$ and first value $k$ in equation 16, that is $s = mac \cdot d_A + k$ (mod $n$). Alternatively, either of the terms in either one of these equations could be negated. If second signature component s is calculated using such a modification of equation 16, the verification procedure is changed accordingly.

Following computation of second signature component s at 208, the signer proceeds as described with respect to Figure 2, preparing signed message 106 at 212.

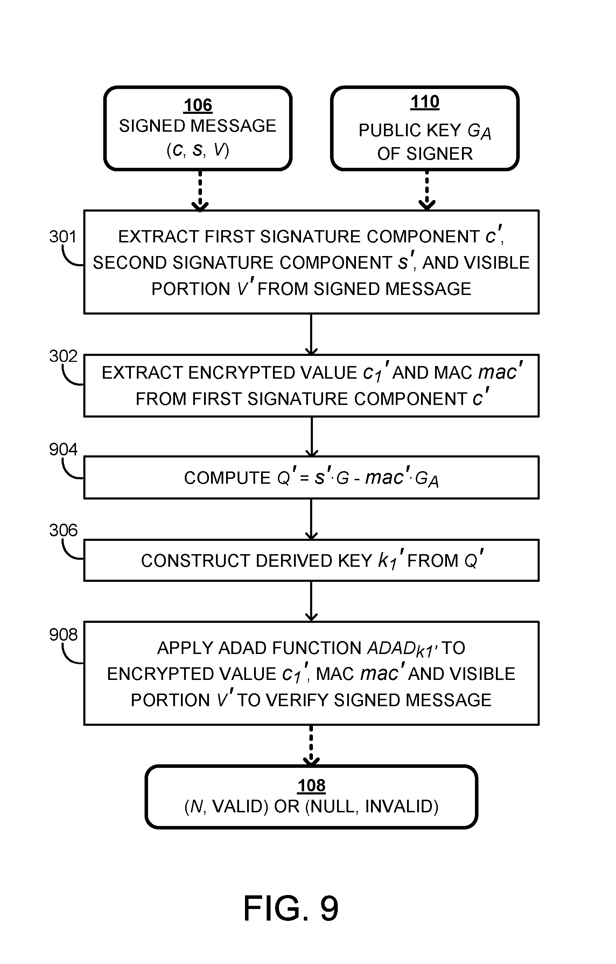

Figure 9 is a simplified flowchart of an example Authenticated Decryption with Associated Data (ADAD) method to be performed by a verifier, for example, verifier 102, for verifying a signed message, for example, signed message 106, which is purported to be signed by a signer, for example, signer 100. As described with respect to Figure 3, the example method illustrated in Figure 9 includes extraction of first signature component c', second signature component s', and visible portion $V'$ from signed message 106 at 301, extraction of encrypted value $c_1'$ and MAC $mac'$ from first signature component c' at 302.

**The apostrophe is used to indicate a value that has not yet been verified.** In this case, MAC $mac'$ has prerequisite length L which is a parameter of the AEAD function agreed on by the signer and the verifier.

At 904, the verifier computes a value $Q'$ using public key $G_A$ 110, according to equation 17:

$$Q' = s' \cdot G - mac' \cdot G_A, \qquad (17)$$

where MAC $mac'$ has been converted to an integer prior to use in equation 17. A comparison of equation 17 to equation 6 reveals that the hash function of the AE-PV, ME-PV, and EM-PV authenticated decryption methods is not involved in AEAD-PV decryption.

As previously described, if second signature component s has been calculated using a modification of equation 16, equation 17 will need to be modified accordingly.

At 306, the verifier constructs a derived key $k_1'$ from value Q' using the same method used by the signer to construct derived key $k_1$ at 204.

At 908, the verifier applies an ADAD function to encrypted value $c_1'$, MAC $mac'$ and visible portion V', where the ADAD function is a reverse transformation of the AEAD function that was used by the signer at 806. The ADAD function, which is keyed by derived key $k_1'$ and denoted $ADAD_{k1'}$, may be used to verify signed message 106 and recover hidden portion N of message $M$ 104. Result 108 of the ADAD function depends on whether the verifier is able to verify signed message 106. If the verifier determines that signed message 106 is valid, result 108 comprises recovered hidden portion N of message $M$ 104 and an indication of validity. If the verifier determines that signed message 106 is invalid, result 108 comprises only an indication of invalidity, without hidden portion $N$.

As discussed previously, the proposed framework may also be applied to keyed ECPVS and other signcryption techniques. Signcryption provides the functionality of both a public key signature and encryption. The signer uses the verifier's public key when creating the signcryption message. Only the verifier can decrypt the message and verify that it was signed by the signer using the verifier's secret key and the signer's public key. This differs from keeping the signer's public key secret as in ECPVS, since the confidentiality is provided by the secrecy of the verifier's secret key, and the signer's public key may be public.

It will be appreciated that for very short messages $M=N\|V$, visible portion V may be null. The AE-PV scheme can handle the case when visible portion $V$ is null without modification. If hidden portion N is null, then hidden portion N should be replaced in the AE-PV scheme by the zero byte or any other public constant. The AEAD-PV scheme may be able to handle null messages. If not, a null message or null portion of a message can be replaced by a public constant.

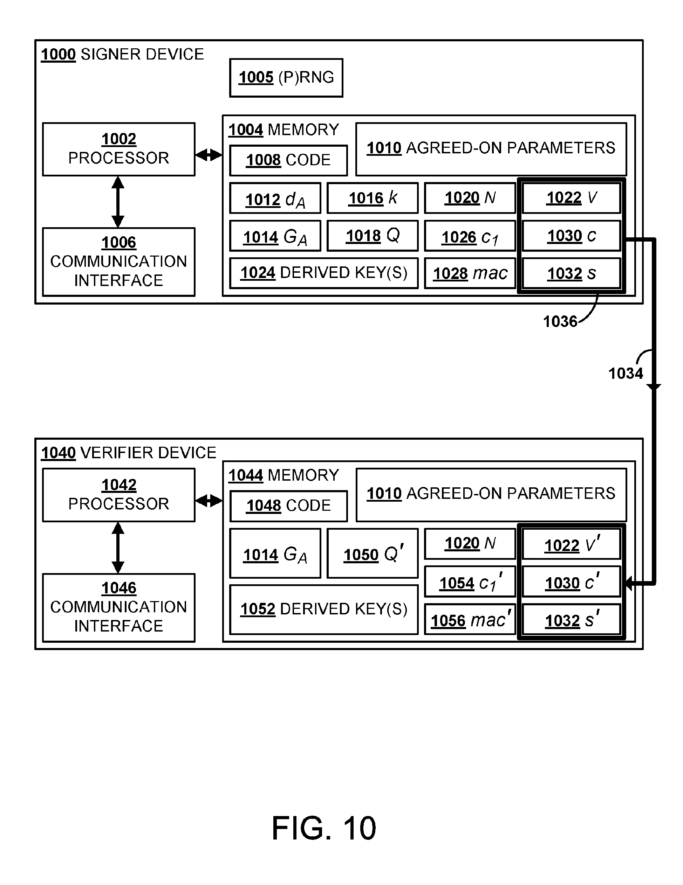

Figure 10 is a simplified block diagram of a signer device 1000 and a verifier device 1040.

Signer device 1000 is able to perform one or more of the example methods illustrated in Figures 2, 4, 6, and 8. Signer device 1000 comprises a processor 1002 which is coupled to a memory 1004 and to a communication interface 1006. Signer device 1000 may comprise a random or pseudo-random number generator (RNG) 1005. Signer device 1000 may contain other elements which, for clarity, are not shown in Figure 10.

Verifier device 1040 is able to perform one or more of the example methods illustrated in Figures 3, 5, 7, and 9. Verifier device 1040 comprises a processor 1042 which is coupled to a memory 1044 and to a communication interface 1046. Verifier device 1040 may contain other elements which, for clarity, are not shown in Figure 10.

Processors 1002 and 1042 may comprise any combination of processing units, digital signal processors, hardware accelerators, and the like. All or part of memory 1004 may be embedded in processor 1002. All or part of memory 1044 may be embedded in processor 1042.

Communication interfaces 1006 and 1046 may be wired communication interfaces or wireless communication interfaces or optical communication interfaces. For example, communication interfaces 1006 and 1046 may be Universal Serial Bus (USB) interfaces, Ethernet interfaces, Integrated Services Digital Network (ISDN) interfaces, Digital Subscriber Line (DSL) interfaces, Local Area Network (LAN) interfaces, High-Definition Multimedia (HDMI) interfaces, Digital Visual Interfaces (DVIs), or Institute of Electrical and Electronics Engineers (IEEE) 1394 interfaces such as i.LINK™, Lynx[SM] or Firewire®. In another example, communication interfaces 1006 and 1046 may be Wireless Local Area Network (WLAN) interfaces, short-range wireless communication interfaces such as Wireless Personal Area Network (WPAN) interfaces, near field communication interfaces, wireless metropolitan area network (WMAN) interfaces, or Wireless Wide Area Network (WWAN) interfaces.

The functionality of one or more of the example methods illustrated in Figures 2, 4, 6 and 8 may be implemented by any combination of processor 1002 and code 1008 stored in memory 1004 of signer device 1000. Memory 1004 may also store applications (not shown) installed in signer device 1000 to be executed by processor 1002.

Each of memories 1004 and 1044 is able to store parameters 1010 that have been agreed on by signer device 1000 and verifier device 1040. Examples of agreed on parameters 1010 are elliptic curve domain parameters D, one or more key derivation functions, one or more hash functions, one or more functions associated with a signature scheme to be implemented (for example, one or more of an AE function, a MAC function, an encryption function, and an AEAD function), as well as parameters associated with the signature scheme, such as a prerequisite length $L$ of a message authentication code.

Memory 1004 is able to store a private key $d_A$ 1012 of signer device 1000 that corresponds to public key $G_A$ 1014 of signer device 1000. Memory 1004 is also able to store a first value $k$ 1016 and a second value $Q$ 1018 as computed at 202, except for those implementations where the pair (k, $Q$) is ephemeral and thus not stored in memory. Memory 1004 is able to store a hidden portion N 1020 and a visible portion $V$ 1022 of a message to be signed. In addition, memory 1004 is able to store one or more derived keys 1024 as constructed at 204 or 404, encrypted value $c_1$ 1026 as computed at 206, 606, or 806 and message authentication code *mac* 1028 as determined at 206, 405, 607, or 806. Memory 1004 is able to store a first signature component c 1030 as determined at 208 or 406, and a second signature component s 1032 as determined 210 or 810. Memory 1004 may store additional elements which are not explicitly shown in Figure 10.

As denoted by an arrow 1034, a signed message 1036 comprising visible portion V 1022, first signature component c 1030, and second signature component s 1032 is able to be sent, directly or via one or more intermediaries, from signer device 1000 to verifier device 1040, where it may be stored in memory 1044 of verifier device 1040. While not explicitly shown, signed message 1036 may be sent from signer device 1000 via communication interface 1006 and may be received by verifier device 1040 via communication interface 1046.

The functionality of one or more of the example methods illustrated in Figures 3, 5, 7 and 9 may be implemented by any combination of processor 1042 and code 1048 stored in memory 1044 of verifier device 1040. Memory 1044 may also store applications (not shown) installed in verifier device 1040 to be executed by processor 1042.

Memory 1044 is able to store public key $G_A$ 1014 of signer device 1000, which it may have received directly from signer device 1000 or from a trusted device (not shown), possibly via communication interface 1046 and possibly by other means. For example, public key $G_A$ 1014 of signer device 1000 may be included in software installed on verifier device 1040. Memory 1044 is also able to store a value Q' 1050 as determined at 304 or 904, one or more derived keys 1052 as constructed at 306 or 506, encrypted value $c_1'$ 1054 as extracted at 302 and message authentication code $mac'$ 1056 as determined at 302 or 508, and recovered hidden portion N 1020. Memory 1044 may store additional elements which are not explicitly shown in Figure 10.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method of applying a signature to an original message [M] (104) to generate a signed message (106, 1036) signed by a signer (100, 1000), the original message [M] (104) consisting of a first portion [N] (1020) and a second portion [V] (1022), the method comprising:

   selecting a first integer value [k] (1016) and computing a second value [Q] (1018) from the first integer value [k] (1016) and from a generator [G] of a finite cyclic group such that the second value [Q] (1018) is included in the finite cyclic group; performing any one of:

   (a) constructing a derived key $[k_1]$ (1024) by applying a key derivation function $[KDF]$ to input that comprises the second value [Q] (1018);
   applying an authenticated encryption function, keyed by the derived key $[k_1]$ (1024), to the first portion [N] (1020) of the message [M] (104) to obtain an encrypted value $[c_1]$ (1026) and a message authentication code $[mac]$ (1028);
   reversibly combining the encrypted value $[c_1]$ (1026) and the message authentication code $[mac]$ (1028) to form a first signature component [c] (1030),
   wherein the finite cyclic group is a subgroup of the group of integers modulo a prime number; or
   (b) constructing a first derived key $[k_{11}]$ (1024) and a second derived key $[k_{12}]$ (1024) by applying a key derivation function $[KDF]$ to input that comprises the second value [Q] (1018);
   applying a message authentication code 'MAC' function, keyed by the second derived key $[k_{12}]$ (1024), to the first portion [N] (1020) of the message [M] (104) to obtain a message authentication code $[mac]$ (1028);
   applying an encryption function, keyed by the first derived key $[k_{11}]$ (1024), to a reversible combination of the first portion [N] (1020) of the message [M] (104) and the message authentication code $[mac]$ (1028) to obtain a first signature component [c] (1030); or
   (c) constructing a first derived key $[k_{11}]$ (1024) and a second derived key $[k_{12}]$ (1024) by applying a key derivation function $[KDF]$ to input that comprises the second value [Q] (1018);
   applying an encryption function, keyed by the first derived key $[k_{11}]$ (1024), to the first portion [N] (1020) of the message [M] (104) to obtain an encrypted value $[c_1]$ (1026);
   applying a message authentication code 'MAC' function, keyed by the second derived key $[k_{12}]$ (1024), to the encrypted value $[c_1]$ (1026) to obtain a message authentication code $[mac]$ (1028);
   reversibly combining the encrypted value $[c_1]$ (1026) and the message authentication code $[mac]$ (1028) to form a first signature component [c] (1030); or
   (d) constructing a derived key $[k_1]$ (1024) by applying a key derivation function $[KDF]$ to input that comprises the second value [Q] (1018);
   applying an authenticated-encryption-with-associated-data function, keyed by the derived key $[k_1]$ (1024), to the first portion [N] (1020) of the message [M] (104) and to the second portion [V] (1022) of the message [M] (104) to obtain an encrypted value $[c_1]$ (1026) and to obtain a message authentication code $[mac]$ (1028);
   reversibly combining the encrypted value $[c_1]$ (1026) and the message authentication code $[mac]$ (1028) to form a first signature component [c] (1030); and

   computing a second signature component [s] (1032) using

   (i) the first integer value [k] (1016);
   (ii) a private key $[d_A]$ (1012) of the signer (100, 1000); and
   (iii) a second integer value dependent on the first signature component [c] (1030) and the second portion **[V]** (1022) of the message [M] (104); and

   reversibly combining the first signature component [c] (1030), the second signature component [s] (1032) and the second portion **[V]** (1022) of the message [*M*] (104) to form the signed message (106, 1036),

wherein verification of the signed message (106, 1036) and recovery of the first portion [N] (1020) of the message [M] (104) from the signed message (106, 1036) involves a public key *[G$_A$]* (110, 1014) of the signer (100, 1000).

**2.** The method as claimed in claim 1 when performing (b), (c) or (d), wherein the finite cyclic group is a subgroup of the group of integers modulo a prime number.

**3.** The method as claimed in claim 1 when performing (b), (c) or (d), wherein the finite cyclic group is a set of points on an elliptic curve and the generator [G] is a base point of the elliptic curve.

**4.** The method as claimed in any preceding claim when performing (a), (b) or (c), the method further comprising:

applying a hash function to a reversible combination of the first signature component [c] (1030) and the second portion **[V]** (1022) of the message [M] (104) to obtain a hash result; and
calculating the second integer value equivalent to the hash result.

**5.** The method as claimed in claim 4, wherein the reversible combination further comprises an identity of the signer (100, 1000).

**6.** The method as claimed in claim 1 when performing (b) or (c), the method further comprising:

constructing the first derived key *[k$_{11}$]* (1024) by applying the key derivation function *[KDF]* to input that comprises the second value [Q] (1018) and first auxiliary information; and
constructing the second derived key *[k$_{12}$]* (1024) by applying the key derivation function *[KDF]* to input that comprises the second value [Q] (1018) and second auxiliary information.

**7.** The method as claimed in claim 6, wherein the second auxiliary information is different than the first auxiliary information.

**8.** The method as claimed in claim 1 when performing (b) or (c), the method further comprising:

applying the key derivation function [*KDF*] to input that comprises the second value [Q] (1018) to obtain a key;
dividing the key into a first part and a second part; and
constructing the first derived key *[k$_{11}$]* (1024) from the first part and constructing the second derived key *[k$_{12}$]* (1024) from the second part.

**9.** A method of verifying a signed message (106, 1036), the signed message (106, 1036) having been generated by applying a signature to an original message [M] (104) that consists of a first portion [N] (1020) and a second portion **[V]** (1022), the method comprising:

receiving the signed message (106, 1036) purported to be signed by a signer (100, 1000), the signed message (106, 1036) having been prepared in a reversible manner from a first signature component [c] (1030), a second signature component [s] (1032), and the second portion **[V]** (1022) of an original message [M] (104);
extracting the first signature component [c] (1030), the second signature component [s] (1032), and the second portion [V] (1022) from the signed message (106, 1036);
receiving a public key *[G$_A$]* (110, 1014) of the signer (100, 1000); performing any one of:

(a) extracting a message authentication code *[mac']* (1056) and an encrypted value [c$_1$'] (1054) from the first signature component [c] (1030);
computing a first value [Q'] (1050) using the second signature component [s] (1032), a generator [G] of a finite cyclic group, the public key *[G$_A$]* (110, 1014), and an intermediate value dependent on the first signature component [c] (1030) and the second portion [V] (1022) of the message [M] (104);
constructing a derived key *[k$_1$']* (1052) by applying a key derivation function *[KDF]* to input that comprises the first value [Q'] (1050);
applying an authenticated decryption function, keyed by the derived key *[k$_1$']* (1052), to the encrypted value [c$_1$'] (1054) and to the message authentication code *[mac']* (1056) to determine whether the signed message (106, 1036) is valid and, where the signed message (106, 1036) is valid, to recover the first portion [N] (1020) of the original message [M] (104),

wherein the finite cyclic group is a subgroup of the group of integers modulo a prime number; or

(b) computing a first value [Q'] (1050) using the second signature component [s] (1032), the generator [G], the public key $[G_A]$ (110, 1014), and an intermediate value dependent on the first signature component [c] (1030) and the second portion [V] (1022) of the message [M] (104);

constructing a first derived key $[k_{11}']$ (1052) and a second derived key $[k_{12}']$ (1052) by applying a key derivation function [KDF] to input that comprises the first value [Q'] (1050);

applying a decryption function, keyed by the first derived key $[k_{11}']$ (1052), to the first signature component [c] (1030) to obtain a result;

extracting a recovered value [N'] and the message authentication code [mac'] (1056) from the result; and

using the second derived key $[k_{12}']$ (1052) to determine whether the message authentication code [mac'] (1056) is valid for the first portion [N] (1020), and, where the message authentication code [mac'] (1056) is valid, recovering the first portion [N] (1020) of the original message [M], wherein the recovered value [N'] is equal to the first portion [N] (1020); or

(c) extracting a message authentication code [mac'] (1056) and an encrypted value $[c_1']$ (1054) from the first signature component [c] (1030);

computing a first value [Q'] (1050) using the second signature component [s] (1032), the generator [G], the public key $[G_A]$ (110, 1014), and an intermediate value dependent on the first signature component [c] (1030) and the second portion [V] (1022) of the message [M] (104);

constructing a first derived key $[k_{11}']$ (1052) and a second derived key $[k_{12}']$ (1052) by applying a key derivation function [KDF] to input that comprises the first value [Q'] (1050);

using the second derived key $[k_{12}']$ (1052) to determine whether the message authentication code [mac'] (1056) is valid for the encrypted value $[c_1']$ (1054), and where the message authentication code [mac'] (1056) is valid, applying a decryption function, keyed by the first derived key $[k_{11}']$ (1052), to the encrypted value $[c_1']$ (1054) to recover the first portion [N] (1020); or

(d) extracting a message authentication code [mac'] (1056) and an encrypted value $[c_1']$ (1054) from the first signature component [c] (1030);

computing a first value [Q'] (1050) using the second signature component [s] (1032), the generator [G], the public key $[G_A]$ (110, 1014), and the message authentication code [mac'] (1056);

constructing a derived key $[k_1']$ (1052) by applying a key derivation function [KDF] to input that comprises the first value [Q'] (1050);

applying an authenticated-decryption-with-associated-data function, keyed by the derived key $[k_1']$ (1052), to the encrypted value $[c_1']$ (1054), to the message authentication code [mac'] (1056) and to the second portion [V] (1022) to determine whether the signed message (106, 1036) is valid and, where the signed message (106, 1036) is valid, to recover the first portion [N] (1020) of the original message [M] (104).

10. The method as claimed in claim 9 when performing (b), (c) or (d), wherein the finite cyclic group is a subgroup of the group of integers modulo a prime number.

11. The method as claimed in claim 9 when performing (b), (c) or (d), wherein the finite cyclic group is a set of points on an elliptic curve and the generator [G] is a base point of the elliptic curve.

12. The method as claimed in claim 9 when performing (b) or (c), the method further comprising:

constructing the first derived key $[k_{11}']$ (1052) by applying the key derivation function [KDF] to input that comprises the first value [Q'] (1050) and first auxiliary information; and

constructing the second derived key $[k_{12}']$ (1052) by applying the key derivation function [KDF] to input that comprises the first value [Q'] (1050) and second auxiliary information.

13. The method as claimed in claim 12, wherein the second auxiliary information is different than the first auxiliary information.

14. The method as claimed in claim 9 when performing (b) or (c), the method further comprising:

applying the key derivation function [KDF] to input that comprises the first value [Q'] (1050) to obtain a key;

dividing the key into a first part and a second part; and

constructing the first derived key $[k_{11}']$ (1052) from the first part and constructing the second derived key $[k_{12}']$ (1052) from the second part.

**15.** A signer device (100, 1000) comprising:

a processor (1002);
a communication interface (1006) coupled to the processor (1002); and
a memory (1004) coupled to the processor (1002), the memory (1004) storing code (1008) which, when executed by the processor (1002), is arranged to perform any one of the methods as claimed in claims 1 to 8.

**16.** A verifier device (102, 1040) comprising:

a processor (1042);
a communication interface (1046) coupled to the processor (1042); and
a memory (1044) coupled to the processor (1042), the memory (1044) storing code (1048) which, when executed by the processor (1002), is arranged to perform any one of the methods as claimed in claims 9 to 14.

**FIG. 1**

**104**
MESSAGE TO BE SIGNED $M = N||V$

202 GENERATE $k$; COMPUTE $Q$ FROM $k$ AND $G$

204 CONSTRUCT DERIVED KEY $k_1$ FROM $Q$

206 APPLY AE FUNCTION $AE_{k1}$ TO $N$ TO OBTAIN ENCRYPTED VALUE $c_1$ AND MAC $mac$
$(c_1, mac) = AE_{k1}(N)$

208 FORM FIRST SIGNATURE COMPONENT $c$ FROM ENCRYPTED VALUE $c_1$ AND MAC $mac$

210 COMPUTE SECOND SIGNATURE COMPONENT
$s = Hash(c||V) \cdot d_A + k \pmod{n}$

212 PREPARE SIGNED MESSAGE $(c, s, V)$

**106**
SIGNED MESSAGE $(c, s, V)$

FIG. 2

**106**
SIGNED MESSAGE
$(c, s, V)$

**110**
PUBLIC KEY $G_A$
OF SIGNER

301 — EXTRACT FIRST SIGNATURE COMPONENT $c'$, SECOND SIGNATURE COMPONENT $s'$, AND VISIBLE PORTION $V'$ FROM SIGNED MESSAGE

302 — EXTRACT ENCRYPTED VALUE $c_1'$ AND MAC $mac'$ FROM FIRST SIGNATURE COMPONENT $c'$

304 — COMPUTE $Q' = s' \cdot G - Hash(c' \| V') \cdot G_A$

306 — CONSTRUCT DERIVED KEY $k_1'$ FROM $Q'$

308 — APPLY AD FUNCTION $AD_{k1'}$ TO ENCRYPTED VALUE $c_1'$ AND MAC $mac'$ TO VERIFY SIGNED MESSAGE

**108**
$(N,$ VALID$)$ OR (NULL, INVALID)

# FIG. 3

**104**
MESSAGE TO BE SIGNED $M = N||V$

202 GENERATE $k$; COMPUTE $Q$ FROM $k$ AND $G$

404 CONSTRUCT DERIVED KEYS $k_{11}$ AND $k_{12}$ FROM $Q$

405 APPLY MAC FUNCTION $T_{k12}$ TO $N$ TO OBTAIN
$mac = T_{k12}(N)$

406 APPLY ENCRYPTION FUNCTION $E_{k11}$ TO $N||mac$ TO
OBTAIN FIRST SIGNATURE COMPONENT $c$

210 COMPUTE SECOND SIGNATURE COMPONENT
$s = Hash(c||V) \cdot d_A + k \pmod{n}$

212 PREPARE SIGNED MESSAGE $(c, s, V)$

**106**
SIGNED MESSAGE $(c, s, V)$

# FIG. 4

106
SIGNED MESSAGE
$(c, s, V)$

110
PUBLIC KEY $G_A$
OF SIGNER

301 EXTRACT FIRST SIGNATURE COMPONENT $c'$, SECOND SIGNATURE COMPONENT $s'$, AND VISIBLE PORTION $V'$ FROM SIGNED MESSAGE

304 COMPUTE $Q' = s' \cdot G - Hash(c' \| V') \cdot G_A$

506 CONSTRUCT DERIVED KEYS $k_{11}'$ AND $k_{12}'$ FROM $Q'$

508 APPLY DECRYPTION FUNCTION $D_{k_{11}'}$ TO FIRST SIGNATURE COMPONENT $c'$; EXTRACT $N'$ AND MAC $mac'$ FROM RESULT

510 USE $k_{12}'$ TO VERIFY THAT $mac'$ IS VALID MAC OF $N'$

108
$(N, \text{VALID})$ OR $(\text{NULL}, \text{INVALID})$

FIG. 5

```
                    ┌─────────────────────────────────────┐
                    │              104                     │
                    │  MESSAGE TO BE SIGNED M = N||V        │
                    └─────────────────────────────────────┘
                                      ┊
                                      ▼
202  ┌─────────────────────────────────────────────────────┐
     │      GENERATE k; COMPUTE Q FROM k AND G              │
     └─────────────────────────────────────────────────────┘
                                      │
                                      ▼
404  ┌─────────────────────────────────────────────────────┐
     │   CONSTRUCT DERIVED KEYS k11 AND k12 FROM Q          │
     └─────────────────────────────────────────────────────┘
                                      │
                                      ▼
606  ┌─────────────────────────────────────────────────────┐
     │   APPLY ENCRYPTION FUNCTION Ek11 TO N TO             │
     │   OBTAIN ENCRYPTED VALUE c1                          │
     └─────────────────────────────────────────────────────┘
                                      │
                                      ▼
607  ┌─────────────────────────────────────────────────────┐
     │   APPLY MAC FUNCTION Tk12 TO ENCRYPTED              │
     │   VALUE c1 TO OBTAIN mac = Tk12(c1)                 │
     └─────────────────────────────────────────────────────┘
                                      │
                                      ▼
208  ┌─────────────────────────────────────────────────────┐
     │   FORM FIRST SIGNATURE COMPONENT c FROM             │
     │   ENCRYPTED VALUE c1 AND MAC mac                     │
     └─────────────────────────────────────────────────────┘
                                      │
                                      ▼
210  ┌─────────────────────────────────────────────────────┐
     │   COMPUTE SECOND SIGNATURE COMPONENT                 │
     │   s = Hash(c||V)·dA + k (mod n)                      │
     └─────────────────────────────────────────────────────┘
                                      │
                                      ▼
212  ┌─────────────────────────────────────────────────────┐
     │        PREPARE SIGNED MESSAGE (c, s, V)             │
     └─────────────────────────────────────────────────────┘
                                      ┊
                                      ▼
                    ┌─────────────────────────────────────┐
                    │              106                     │
                    │      SIGNED MESSAGE (c, s, V)        │
                    └─────────────────────────────────────┘
```

104
MESSAGE TO BE SIGNED $M = N||V$

202 GENERATE $k$; COMPUTE $Q$ FROM $k$ AND $G$

404 CONSTRUCT DERIVED KEYS $k_{11}$ AND $k_{12}$ FROM $Q$

606 APPLY ENCRYPTION FUNCTION $E_{k11}$ TO $N$ TO OBTAIN ENCRYPTED VALUE $c_1$

607 APPLY MAC FUNCTION $T_{k12}$ TO ENCRYPTED VALUE $c_1$ TO OBTAIN $mac = T_{k12}(c_1)$

208 FORM FIRST SIGNATURE COMPONENT $c$ FROM ENCRYPTED VALUE $c_1$ AND MAC $mac$

210 COMPUTE SECOND SIGNATURE COMPONENT $s = Hash(c||V) \cdot d_A + k \pmod{n}$

212 PREPARE SIGNED MESSAGE $(c, s, V)$

106
SIGNED MESSAGE $(c, s, V)$

## FIG. 6

```
┌─────────────────────┐        ┌─────────────────────┐
│        106          │        │        110          │
│  SIGNED MESSAGE     │        │  PUBLIC KEY GA      │
│    (c, s, V)        │        │   OF SIGNER         │
└─────────────────────┘        └─────────────────────┘
```

301 — EXTRACT FIRST SIGNATURE COMPONENT $c'$, SECOND SIGNATURE COMPONENT $s'$, AND VISIBLE PORTION $V'$ FROM SIGNED MESSAGE

302 — EXTRACT ENCRYPTED VALUE $c_1'$ AND MAC $mac'$ FROM FIRST SIGNATURE COMPONENT $c'$

304 — COMPUTE $Q' = s' \cdot G - Hash(c'\|V') \cdot G_A$

506 — CONSTRUCT DERIVED KEYS $k_{11}'$ AND $k_{12}'$ FROM $Q'$

708 — USE $k_{12}'$ TO VERIFY THAT $mac'$ IS VALID MAC OF ENCRYPTED VALUE $c_1'$

710 — APPLY DECRYPTION FUNCTION $D_{k_{11}'}$ TO ENCRYPTED VALUE $c_1'$ TO OBTAIN $N$

```
┌─────────────────────────────────────┐
│              108                    │
│  (N, VALID) OR (NULL, INVALID)      │
└─────────────────────────────────────┘
```

# FIG. 7

**104**
MESSAGE TO BE SIGNED $M = N||V$

202   GENERATE $k$; COMPUTE $Q$ FROM $k$ AND $G$

204   CONSTRUCT DERIVED KEY $k_1$ FROM $Q$

806   APPLY AEAD FUNCTION $AEAD_{k1}$ TO $N$ AND $V$ TO OBTAIN ENCRYPTED VALUE $c_1$ AND MAC $mac$ $(c_1, mac) = AEAD_{k1}(N, V)$

208   FORM FIRST SIGNATURE COMPONENT $c$ FROM ENCRYPTED VALUE $c_1$ AND MAC $mac$

810   COMPUTE SECOND SIGNATURE COMPONENT $s = mac \cdot d_A + k \pmod{n}$

212   PREPARE SIGNED MESSAGE $(c, s, V)$

**106**
SIGNED MESSAGE $(c, s, V)$

FIG. 8

**106**
SIGNED MESSAGE
$(c, s, V)$

**110**
PUBLIC KEY $G_A$
OF SIGNER

301 — EXTRACT FIRST SIGNATURE COMPONENT $c'$, SECOND SIGNATURE COMPONENT $s'$, AND VISIBLE PORTION $V'$ FROM SIGNED MESSAGE

302 — EXTRACT ENCRYPTED VALUE $c_1'$ AND MAC $mac'$ FROM FIRST SIGNATURE COMPONENT $c'$

904 — COMPUTE $Q' = s' \cdot G - mac' \cdot G_A$

306 — CONSTRUCT DERIVED KEY $k_1'$ FROM $Q'$

908 — APPLY ADAD FUNCTION $ADAD_{k1'}$ TO ENCRYPTED VALUE $c_1'$, MAC $mac'$ AND VISIBLE PORTION $V'$ TO VERIFY SIGNED MESSAGE

**108**
$(N,$ VALID) OR (NULL, INVALID)

FIG. 9

**1000** SIGNER DEVICE

**1005** (P)RNG

**1002** PROCESSOR

**1004** MEMORY

**1008** CODE

**1010** AGREED-ON PARAMETERS

**1012** $d_A$

**1016** $k$

**1020** $N$

**1022** $V$

**1006** COMMUNICATION INTERFACE

**1014** $G_A$

**1018** $Q$

**1026** $c_1$

**1030** $c$

**1024** DERIVED KEY(S)

**1028** $mac$

**1032** $s$

1036

1034

**1040** VERIFIER DEVICE

**1042** PROCESSOR

**1044** MEMORY

**1048** CODE

**1010** AGREED-ON PARAMETERS

**1014** $G_A$

**1050** $Q'$

**1020** $N$

**1022** $V'$

**1046** COMMUNICATION INTERFACE

**1054** $c_1'$

**1030** $c'$

**1052** DERIVED KEY(S)

**1056** $mac'$

**1032** $s'$

# FIG. 10

Europäisches
Patentamt

European
Patent Office

Office européen
des brevets

**EUROPEAN SEARCH REPORT**

Application Number

EP 11 18 4740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | "IEEE P1363a / D12 Draft Standard Specifications for Public Key Cryptography â Amendment 1: Additional Techniques ; P1363a-D12", IEEE DRAFT; P1363A-D12, IEEE-SA, PISCATAWAY, NJ USA, vol. 1363, 15 August 2006 (2006-08-15), pages 1-177, XP017628397, [retrieved on 2006-08-15] * pages 57-60; figure 8 * | 1-16 | INV. H04L9/32 |
| A | EP 1 083 700 A2 (CERTICOM CORP [CA] CERTICOM CORP [CA]; PITNEY BOWES INC [US]) 14 March 2001 (2001-03-14) * columns 1-6; figures 1-4 * | 1-16 | |
| A | FANGWEI LI ET AL: "A new authenticated encryption schemes without using Hash and Redundancy functions", INDUSTRIAL MECHATRONICS AND AUTOMATION (ICIMA), 2010 2ND INTERNATIONAL CONFERENCE ON, IEEE, PISCATAWAY, NJ, USA, 30 May 2010 (2010-05-30), pages 378-381, XP031725353, ISBN: 978-1-4244-7653-4 * pages 378-380; figures 1-4 * | 1-16 | |

TECHNICAL FIELDS SEARCHED (IPC)

H04L

-/--

The present search report has been drawn up for all claims

| Place of search | Date of completion of the search | Examiner |
|---|---|---|
| Munich | 20 January 2012 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 18 4740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | CAMPAGNA G ZAVERUCHA CERTICOM CORP M: "A Cryptographic Suite for Embedded Systems (SuiteE); draft-campagna-suitee-00.txt", A CRYPTOGRAPHIC SUITE FOR EMBEDDED SYSTEMS (SUITEE); DRAFT-CAMPAGNA-SUITEE-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 18 October 2010 (2010-10-18), pages 1-38, XP015071771, [retrieved on 2010-10-18] * section 7 * ----- | 1-16 | |
| | | | TECHNICAL FIELDS SEARCHED (IPC) |

The present search report has been drawn up for all claims

| Place of search | Date of completion of the search | Examiner |
|---|---|---|
| Munich | 20 January 2012 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                          

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 11 18 4740

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2012

| Patent document cited in search report | | Publication date | Patent family member(s) | | Publication date |
|---|---|---|---|---|---|
| EP 1083700 | A2 | 14-03-2001 | AT | 366007 T | 15-07-2007 |
| | | | AU | 777723 B2 | 28-10-2004 |
| | | | CA | 2317775 A1 | 07-03-2001 |
| | | | DE | 60035317 T2 | 13-03-2008 |
| | | | EP | 1083700 A2 | 14-03-2001 |
| | | | EP | 1830514 A1 | 05-09-2007 |
| | | | EP | 2306670 A2 | 06-04-2011 |
| | | | JP | 4795519 B2 | 19-10-2011 |
| | | | JP | 2001125482 A | 11-05-2001 |
| | | | JP | 2011120266 A | 16-06-2011 |
| | | | US | 7249259 B1 | 24-07-2007 |
| | | | US | 2008141036 A1 | 12-06-2008 |
| | | | US | 2011093718 A1 | 21-04-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7249259 B, Vanstone

### Non-patent literature cited in the description

- American National Standard for Financial Services ANS X9.62-2005: Public Key Cryptography for the Financial Services Industry - The Elliptic Curve Digital Signature Algorithm (ECDSA. Accredited Standards Committee X9, Inc, 2005
- PKCS #1 v2.1: RSA Cryptography Standards. RSA Laboratories, 2002
- Message Recovery for Signature Schemes Based on the Discrete Logarithm Problem. **NYBERG et al.** Advances in Cryptology - Eurocrypt '94. Springer Verlag, 1994
- American National Standard for Financial Services Draft X9.92-2007-02-21: Public Key Cryptography for the Financial Services Industry, Digital Signature Algorithms Giving Partial Message Recovery Part 1: Elliptic Curve Pintsov-Vanstone Signatures (ECPVS. 2007
- Standards for Efficient Cryptography SEC1: Elliptic Curve Cryptography. Certicom Research, Certicom Corp, 2000
- Standards for Efficient Cryptography SEC2: Recommended Elliptic Curve Domain Parameters version 2.0. Certicom Research, Certicom Corp, 2000
- **DUBUISSON.** ASN.1 Communication Between Heterogeneous Systems. Morgan Kaufmann, 2000
- NIST SP 800-38D Recommendation for Block Cipher Modes of Operation: The Galois/Counter Mode (GCM) and GMAC. National Institute of Standards and Technology, 2007
- FIPS PUB 197 Advanced Encryption Standard (AES. Federal Information Processing Standards, 2001
- Handbook of Applied Cryptography. CRC Press
- AES Key Wrap Specification. National Institute of Standards and Technology, November 2001
- NIST SP 800-38A Recommendation for Block Cipher Modes of Operation. National Institute of Standards and Technology, 2001
- ISO/IEC 9797 Data Cryptographic Techniques - Data integrity mechanism using a cryptographic check function employing a block cipher algorithm. International Organization for Standardization, 1989
- NIST SP 800-38B Recommendation for Block Cipher Modes of Operation: The CMAC Mode for Authentication. National Institute of Standards and Technology, 2005
- Authenticated encryption with associated data. **ROGAWAY.** Proceedings of ACM CCS'02: 98-107. ACM, 2002
- **KOHNO et al.** CWC: A High-Performance Conventional Authenticated Encryption Mode. *Proceedings of Fast Software Encryption 2004 (FSE'04), LNCS,* 2004, vol. 3017, 408-426